(19) **Europäisches Patentamt**
**European Patent Office**
**Office européen des brevets**

(11) **EP 4 143 016 B1**

(12) **EUROPEAN PATENT SPECIFICATION**

(45) Date of publication and mention
of the grant of the patent:
**27.11.2024 Bulletin 2024/48**

(21) Application number: **21727677.3**

(22) Date of filing: **30.04.2021**

(51) International Patent Classification (IPC):
**B29D 30/02** *(2006.01)*    **B29D 30/06** *(2006.01)*

(52) Cooperative Patent Classification (CPC):
**B29D 30/02; B29D 30/0678**

(86) International application number:
**PCT/US2021/030317**

(87) International publication number:
**WO 2021/222845 (04.11.2021 Gazette 2021/44)**

(54) **METHOD FOR FORMING A NON-PNEUMATIC TIRE**

VERFAHREN ZUR HERSTELLUNG EINES LUFTLOSEN REIFENS

PROCÉDÉ DE FORMATION D'UN PNEU NON PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2020 US 202063018496 P**

(43) Date of publication of application:
**08.03.2023 Bulletin 2023/10**

(73) Proprietor: **COMPAGNIE GENERALE DES ETABLISSEMENTS MICHELIN**
**63000 Clermont-Ferrand (FR)**

(72) Inventors:
• **KING, Patrick F.**
**Greenville, South Carolina 29605 (US)**
• **MAST, Christopher**
**Greenville, South Carolina 29605 (US)**
• **DUTY, John**
**Greenville, South Carolina 29605 (US)**
• **MILES, Kevin C**
**Greenville, South Carolina 29605 (US)**
• **THOMPSON, Ronald Hobart**
**Greenville, South Carolina 29605 (US)**

(74) Representative: **Casalonga**
**Casalonga & Partners**
**Bayerstraße 71/73**
**80335 München (DE)**

(56) References cited:
**EP-A1- 3 144 160       WO-A1-03/018332**
**WO-A1-2017/106723     WO-A1-2018/102303**
**WO-A1-2019/050547     US-A1- 2011 024 008**

**Description**

**FIELD**

This disclosure relates to non-pneumatic tires (NPTs) for on-road or off-road vehicles (e.g., automobiles, light trucks, and heavy trucks, all-terrain vehicles, zero turn radius lawn mowers, military vehicles). Particularly, it relates to off-road vehicles which may require higher speed and load capabilities, along with high damage tolerance.

**BACKGROUND**

Non-pneumatic tires (NPTs) have advantages over pneumatic tires. NPTs are not pressure vessels, as are pneumatic tires. They cannot fail due to air pressure loss.

An NPT develops load through mechanical means - bending, tension, and/or compression of various design elements. A pneumatic tire, on the other hand, is pretensioned, due to inflation pressure. A vertical load may be counteracted by decreasing the tension in a pretensioned member, such as a reinforced ply. Such "releasing" of a pretension may be more efficient than inducing a structural deflection. These pretensioned plies may be thin and therefore light weight. As a result, the load and speed capacity of the pneumatic tire may be enhanced.

Prior art reveals methods to add pretension to NPTs. For example, US2019/0009613 (owned by the current applicant) discloses a spoke design and a mechanical means of adding pre-tension to the spokes. Load capacity and fatigue improve as a result. However, adding pretension via the disclosed mechanical means may be laborious.

NPTs may require a manufacturing method that is inefficient and/or costly. An example of prior art that relates to the manufacture of NPT is US 9,004,901 (owned by current applicant). A method is disclosed for forming thermoset polyurethane spokes and bonding said spokes to a rubber tread and to a central hub. The mold rotates, creating centrifugal forces that enable the mold to fill. The liquid polyurethane then cures and hardens, and the NPT maybe demolded. Such an apparatus and procedure may be expensive to operate, and may require creation of new production procedures.

US 9,751,270 (owned by current applicant) discloses a thermoplastic molding procedure for forming an NPT. Thermoplastic injection is a mature industry, which may reduce costs for the NPT. Another molding procedure for forming a non-pneumatic tire is disclosed in EP 3144160 A1. However, there is no disclosure for the pretension in this prior art.

The current disclosure bridges this gap by providing an NPT that comprises thermoplastic elastomer which is pre-tensioned during the process of forming the NPT. The pre-tension is provided by a thermal means that is naturally available in the forming process. As such, the virtue of efficient manufacturing is combined with the efficiency of pretension, without a complexity of adding a pretension from mechanical means.

**SUMMARY**

The present invention is related to a method for forming a non-pneumatic tire according to independent claim 1.

Aspects and advantages will be set forth in part in the following description, or may be obvious from the description, or may be learned through practice. The invention has general application for vehicles that use tires. Specifically, application is especially suited to off-road vehicles that may require high speed and high load, as well as high absorbed energy capabilities.

According to an aspect, there is provided a non-pneumatic tire comprising a reinforced annular beam, an annular support extending radially inward from the annular beam, said support comprising a thermoplastic elastomer; and a rim extending radially inward from the annular beam. The annular support has circumferential reinforcement such that the inner radial surface does not deflect more than 2 mm. Further, the annular support has a pre-strain of not less than 0.5% that results from a thermal contraction after an injection molding operation.

According to an aspect, there is provided a non-pneumatic tire comprising a reinforced annular beam, an annular support extending radially inward from the annular beam, said support comprising a thermoplastic elastomer; and a rim extending radially inward from the annular beam. The non-pneumatic tire has an initial tangent vertical stiffness that is at least twice a tangent vertical stiffness at a design load.

According to an aspect, there is provided a non-pneumatic tire comprising a reinforced annular beam, an annular support extending radially inward from the annular beam, said support comprising a thermoplastic elastomer; and a rim extending radially inward from the annular beam. The reinforcement of the annular beam has a compression strength of not less than 0.5 MPa, and the reinforcement is configured such that the annular beam is transversally isotropic in the RY plane

According to claim 1 of the present invention, there is provided a process for forming an NPT. The NPT has a tread portion with a tread pattern. A reinforced annular beam extends radially inward from the tread. The annular beam and tread are formed in a first process. An annular support comprising a thermoplastic elastomer extends radially inward from the annular beam and is formed in a second process that comprises thermoplastic injection. This second process comprises a mold into which the annular beam and tread are positioned. The mold supports the tread pattern only on an outer radial extent.

These and other features, aspects and advantages of the present invention will become better understood with reference to the following description and appended claims. The accompanying drawings, which are incorporated in and constitute a part of this specification, illustrate embodiments and, together with the description, serve to explain the principles.

## BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

A detailed description of embodiments is provided below, by way of example only, with reference to the accompanying drawings, in which:

Figure 1 is an exemplary example of an NPT.
Figure 2 is a load vs. deflection graph of an exemplary example of an NPT and a prior art NPT.
Figure 3 is an exemplary example of an annular beam and tread.
Figure 4 is a Y-Z cross section view of an annular beam
Figure 5 is a 2D FE model of an annular beam when subjected to pressure seen in thermoplastic injection.
Figure 6 is an RY section view of an annular beam placed in a mold for thermoplastic injection.
Figure 7 is an FEA simulation of deflections of two annular beams when subjected to pressures seen in thermoplastic injection
Figure 8 shows FEA simulations of two NPTs when loaded against an off road obstacle.
Figure 9 shows critical load for NPTs with different numbers of reinforcement layers.
Figure 10 shows thermoplastic spokes, annular beam and tread of an exemplary example of an NPT
Figure 11 illustrates a difference between a spoke curvilinear distance and a linear distance between spoke ends.
Figure 12 is a section view of an exemplary NPT, showing a hub area
Figure 13 shows FEA simulations of two NPTs loaded to 4000 N.
Figure 14 shows an exemplary NPT loaded to 7000 N
Figure 15 is an FEA prediction of load vs. deflection of four NPTs.
Figure 16 is an FEA prediction of tangent vertical stiffness of three NPTs.
Figure 17 shows FEA predictions of contact patch length vs. deflection for three NPTs.
Figure 18 shows an FEA prediction for a single spoke subjected to a critical buckling load.
Figure 19 shows an exemplary gating location for an exemplary NPT.

It is to be expressly understood that the description and drawings are only for purposes of illustrating certain embodiments and are an aid for understanding. They are not intended to and should not be limiting. The use of identical or similar reference numerals in different figures denotes identical or similar features.

## DEFINITION OF TERMS

The following terms are defined as follows for this disclosure, with material properties referring to those at ambient temperature, unless otherwise noted:

"Hub" refers to any structure for supporting the tire and capable of attachment to a vehicle axis.

When referring to a thermoplastic elastomer, "modulus" means Young's tensile modulus of elasticity measured per ISO 527-1 :2019.

When referring to a reinforcement cord or cable, "modulus" means Young's tensile modulus of elasticity measured per ASTM D2969. The tensile modulus may be calculated as the secant modulus at a strain of 0.5%.

When referring to a reinforcement cord or cable, "compressive strength" means the compressive stress at failure in uniaxial compression, measured by the method disclosed in Journal of Composite Materials, Volume 49, issue 6, pages 739-748, the article "Theoretical and experimental compressive strength of a glass fiber -vinyl ester pultruded composite"

When referring to rubber, "shear modulus" refers to the dynamic shear modulus as measured according to ASTM D5992 - 96 (2018), at 10 HZ, 23C, and 2% strain. When referring to rubber, "extension modulus" refers to a Young's modulus measured according to ASTM D412.

"Design Load" of a tire is the usual and expected operating load of the tire.

"Design contact length" is the contact length when loaded to design load.

Tire vertical force vs. deflection and footprint measurements may be performed according to SAEJ2704.

## DETAILED DESCRIPTION

The present invention provides a method of forming the non-pneumatic tire. For purposes of describing the invention, reference now will be made in detail to embodiments and/or methods, one or more examples of which are illustrated in or with the drawings. Each example is provided by way of explanation, not limitation. In fact, it will be apparent to those skilled in the art that various modifications and variations can be made in the present invention without departing from the scope or spirit. For instance, features or steps illustrated or described as part of one embodiment, can be used with another embodiment or steps to yield a still further embodiments or methods. Thus, it is intended that the present invention covers such modifications and variations as come within the scope of the appended claims and their equivalents.

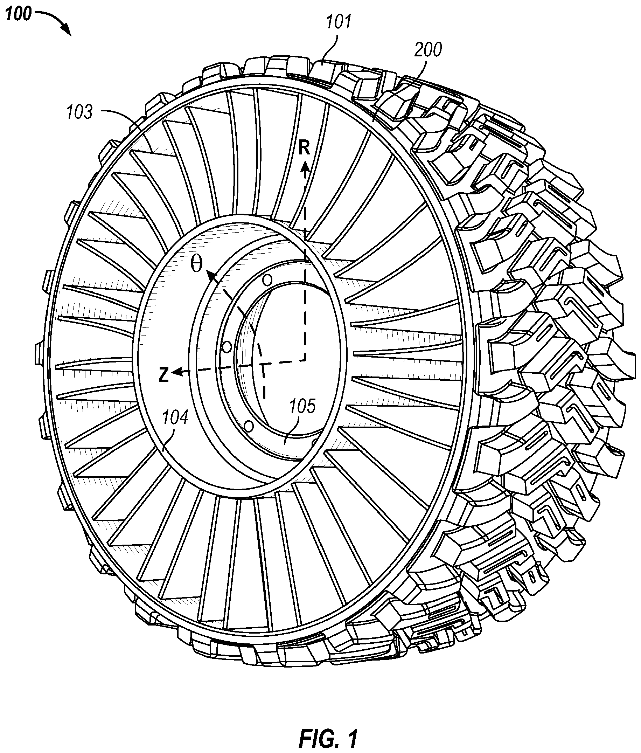

Figure 1 shows an exemplary example of an NPT 100, in the size 26x10-12. This is a common size for off-road applications. The tire defines a cylindrical coordinate system with radial direction R, circumferential direction θ, and axial direction Y. A convenient cartesian coordinate system has X as the direction of travel of the tire, Y as the axial direction, and Z as the vertical direction.

The tire comprises a tread portion 101, an annular beam 102 that comprises reinforcement in the circumferential direction, an annular support portion 103 that comprises a thermoplastic elastomer, a rim portion 104, and a hub portion 105. In this embodiment, the annular support portion comprises spokes that extend in the radial direction, connecting the inner surface of the annular beam to the rim without intersection with any ones of the other spokes.

In this embodiment, the annular beam and tread are formed in an initial molding operation. Along with the hub portion 105, the annular beam is placed in a mold for a secondary molding operation, in which the spokes are formed using thermoplastic injection.

Prior art construction, such as that described in US 9,004,901, used thermoset polyurethane to form the spokes. The current application discloses a method of forming the spokes with thermoplastic injection of thermoplastic elastomer. Further, the method may result in an NPT having pretensioned spokes. This pretension is due to thermal contraction of the spokes, as they are constrained at radially inward and radially outward extents by the rim and annular beam, respectively.

As a matter of historical chronology, the inventors were first motivated by superior economics of thermoplastic injection molding, compared to rotational molding of thermoset polyurethane. Study tires in the dimension 24x12-12 were prototyped, tested, and compared to prior art tires which comprised spokes of thermoset polyurethane. This is a size tire that is often used for off-road vehicles, such as All-Terrain Vehicles (ATV) and Zero Turn Radius (ZTR) lawn mowers. Results were surprising - better than was anticipated. These positive surprises included:

1. Tire rolling resistance was reduced by 20%, even though identical tread and annular beam portions were used for the study tire as for the prior art tire.

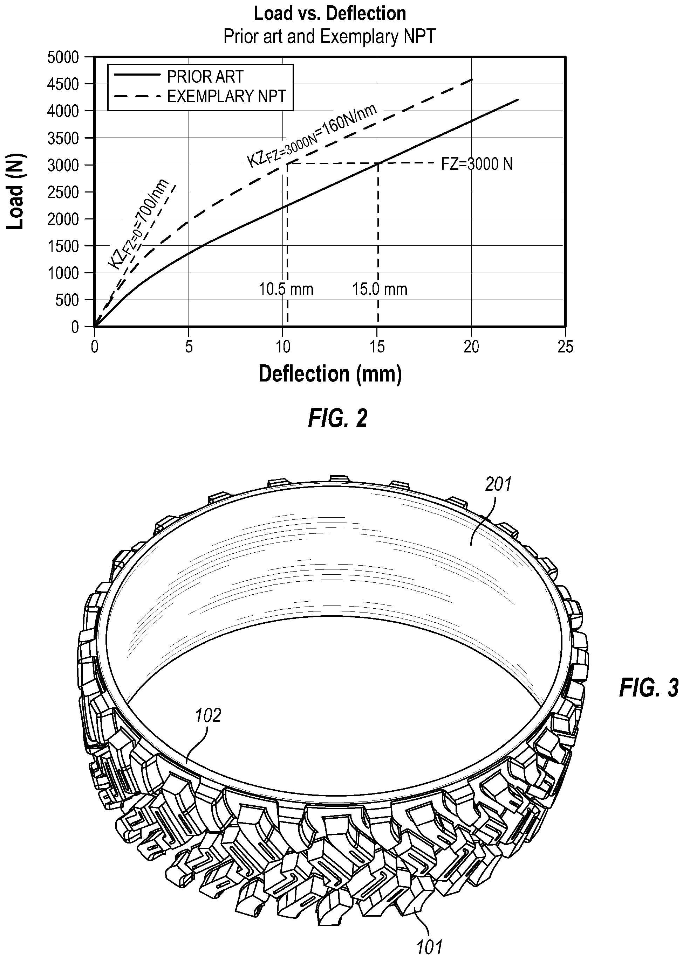

2. A strong non-linear load vs. deflection curve was created. An initial slope of load vs. deflection was higher for the current invention compared to prior art, even though the tangent slope at a design load was essentially unchanged. This is shown in Figure 2. Those skilled in the art of tire design will recognize the value of such behavior. At a design load of 3000 N, the exemplary NPT had a deflection that was 4.5 mm less (30% less) than the prior art tire. Yet, the tangent KZ at a design load FZ=3000 N of 160 N/mm was the same for both NPTs. The exemplary tire had a much higher initial KZ of 700 N/mm. The initial KZ was more than 4 times higher than the KZ at the design load. Thus, ride comfort was maintained for the exemplary NPT, while deformation and deflection was reduced.

3. The process for forming thermoplastic spokes was relatively easy, even though significant problems had been anticipated. Thermoplastic injection requires high pressures. 28 MPa (4000 psi) or higher pressures may occur at regions close injection gates. Even at locations not in the proximity of injection gates, pressures at the end of mold fill may be 100 psi (0.7 MPa), 200 psi (1.4 MPa), or higher. For this reason, injection molding employs robust steel or aluminum molds held together by clamping forces of several metric tons. Rubber - even reinforced rubber - is not used as a surface against which to inject high pressure plastic. Yet, the architecture of NPT 100 in Figure 1 obviously requires a large area of contact between the radially inward surface of annular beam 102 and the annular support 103, comprising thermoplastic elastomer. The inventors suspected the high injection pressure would deform the annular beam and tread, resulting in poor thickness control of the thermoplastic elastomer. However, this was not the case. The process was stable and well controlled.

After diligent study the inventors identified multiple process and product attributes necessary that led to even better results. Each of these is disclosed below.

## Reinforced annular beam with specific reinforcement properties

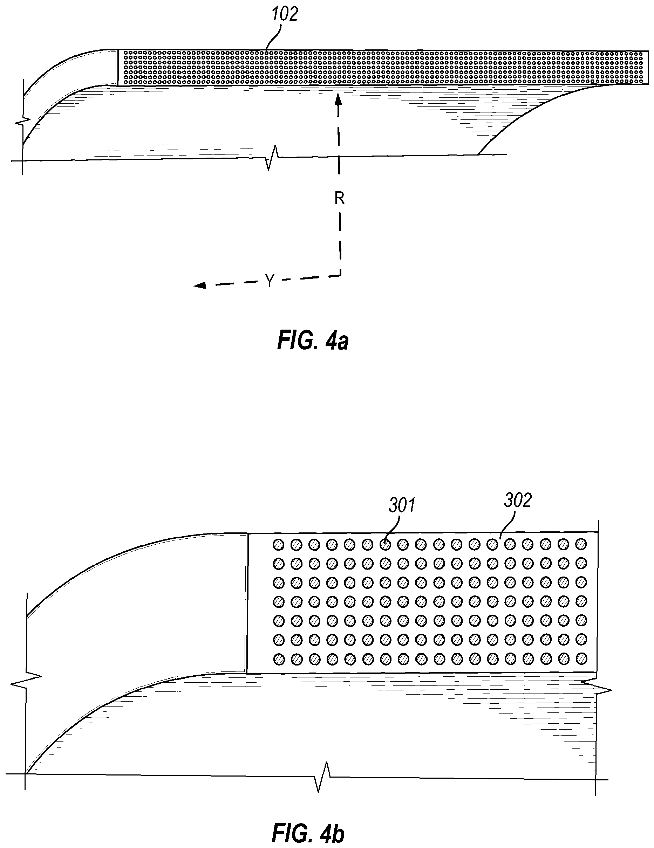

Figure 3 shows an exemplary embodiment of tread 101 and annular beam 102. They are one molded part, formed in an initial molding operation. The annular beam is further illustrated in Figures 4a and 4b. In this embodiment, the annular beam is reinforced with a circumferential reinforcement 301. In this embodiment, the reinforcement comprises 7 layers that are radially spaced. The beam comprises an elastomeric matrix material 302, which may comprise rubber. The spacing of the radial layers is approximately equal to the reinforcement pace in the axial direction. As such, this reinforcement forms a transversely isotropic composite in the R-Y section of the annular beam. If the cord to cord spacing in the radial direction is within +/-33% of the cord to cord spacing in the axial direction, the resulting composite is approximately transversely isotropic.

The reinforcement may comprise steel cable or any suitable high stiffness and high strength material. In this exemplary embodiment, the reinforcement comprises a continuously pultruded glass monofilament. The inventors have found this type of reinforcement may be particularly advantageous.

In Journal of Composite Materials, Volume 49, issue 6, pages 739-748, the article "Theoretical and experimental compressive strength of a glass fiber -vinyl ester pultruded composite" discloses properties of a continuously pultruded glass fiber monofilament. This reinforcement attains high stiffness and strength in tension and in compression. The properties of this reinforcement are advantageous for the exemplary NPT. These include:

- Young's modulus E = 40 GPa
  High modulus is advantageous, as the exemplary example annular beam functions as a pressure vessel during the thermoplastic injection process. High stiffness enables a more stable molding process.
- Compressive strength $\sigma_c$ = 1.1 GPa
  Off-road use of the exemplary example results in very high impact loads. Those skilled in off-road tire design know that dynamic loading can approach 4 times that of a design load, for instantaneous events. High compressive strength is a performance requirement.
- CTE = 5 x 10$^{-6}$ mm/mm-C
  After the molding process, the annular beam anchors the radially outer extremity of the spokes. A low CTE for circumferential reinforcements results in an annular beam that does not shrink after demolding, even for high molding temperatures. Thermal prestrain develops in the thermoplastic spokes. Steel has a CTE = 12 x 10$^{-6}$ mm/mm-C, which is also acceptably low. By comparison, a thermoplastic elastomer used in the exemplary example has CTE = 1.6 x 10$^{-4}$ mm/mm-C. When low CTE is combined with a high modulus, a very efficient structure results, enabling spoke prestrain to occur.

2D Finite Element Analyses (FEA) were performed by the inventors to understand and quantify these effects.

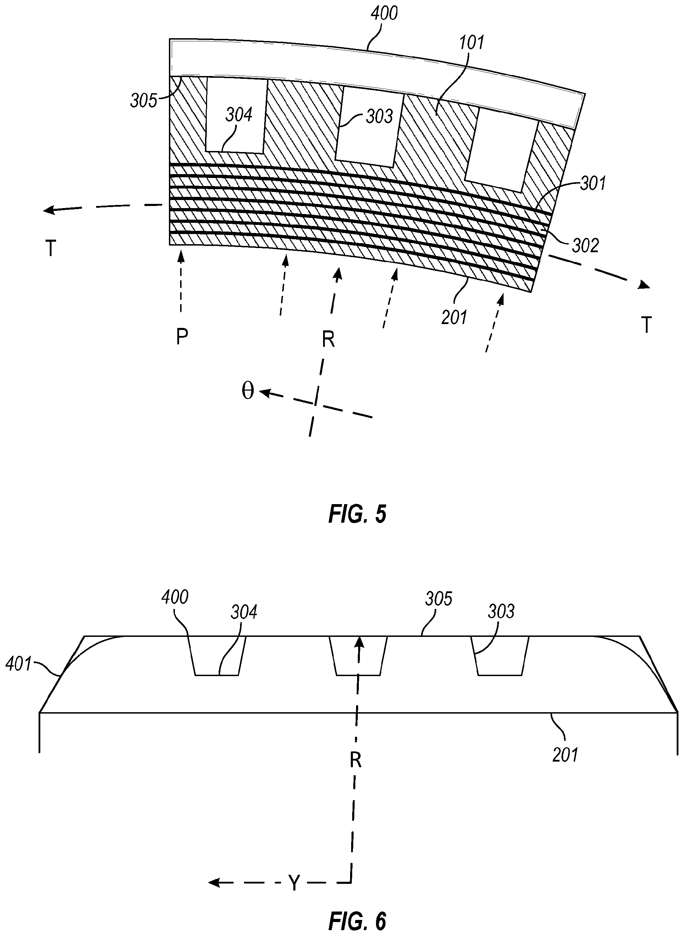

Figure 5 is a structural 2D FEA of a molding simulation to predict deflections in the annular beam and tread. In this 2D plain strain model, stiffnesses are represented on a unit width basis. Calculation of the reinforcement stiffness is therefore normalized with respect to a section that is 1 mm thick in the axial direction.

In the thermoplastic molding process, molten elastomer is injected into a mold, into which an annular beam has been positioned. In an exemplary embodiment, the annular beam is positioned such that radially inward surface 201 functions as an outer radial extent of a mold cavity. The molding operation then forms at least a portion of the annular support 103, and at least a portion of the rim 104. The hub 105 may also be positioned in the same mold, and the molding operation may overmold the thermoplastic elastomer around the hub.

As the elastomer fills the mold and contacts the radially inward surface 201 of the annular beam, very high pressures react against surface 201. The annular beam comprises circumferential reinforcement 301 and matrix material 302. Tread 101 contacts a rigid mold surface 400 on the outer radial extents 305 of the tread pattern. Tread groove walls 303 may be free to deform. The outer radial extent of the tread is constrained in the radial direction, but the tread may be free to compress. In other words, the presence of a tread pattern may create air voids between the tread and the mold surface 400. Therefore, the rigidity of the annular beam in the circumferential direction becomes very important.

In order to react the pressure, the reinforcements develop tension force T. This is necessary because the tread groove walls may deform. Since the tread may comprise rubber, the compressive stiffness of the tread will be small compared to an injection pressure. The blocks will compress and bulge out due to Poisson effects. Stiff reinforcements are necessary to mitigate this undesired effect.

Figure 6 illustrates an exemplary position of the annular beam and tread in a mold, in an RY section. Mold surface 401 is at a lateral extent of the annular beam and tread. This section serves as shut off, preventing molten elastomer from traveling out of the mold cavity and around the annular beam. In this exemplary embodiment, mold surface 400 constrains the outer radial extent 305 of the tread alone. In other words, taken together with Figure 5, mold surfaces 400 and 401 may be smooth and therefore low cost. There does not need to be a supporting structure for tread groove bottom 304, nor tread pattern side 303.

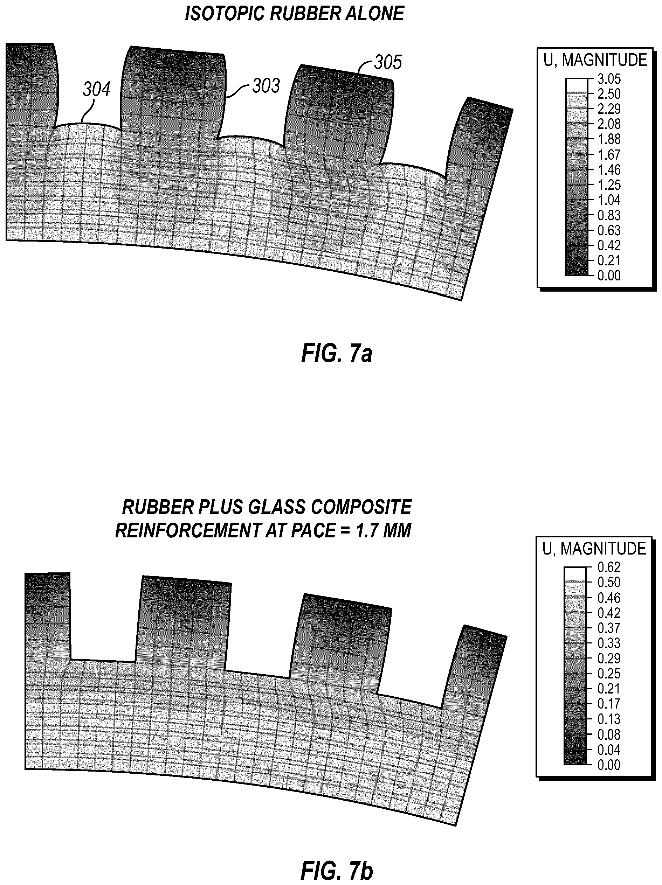

Deflection results (in mm) are shown in Figures 7a and 7b for the case of P = 0.7 MPa (100 psi). 7a shows deflection for the case of no reinforcement. If isotropic rubber with an extension modulus = 7 MPA is used, the radially inner surface deflects between 2.5 to 3.05 mm. This is excessive. Those skilled in the art of thermoplastic injection will recognize that a 3 mm wall thickness is customary. Having a defining mold surface that deflects as much as a desired wall thickness would create grave problems. Additionally, there is circumferential variation in the thickness of around 0.5 mm.

By contrast, Figure 7b shows results with reinforcement. The deflections are about five times less. The inner surface deflection is now 0.50 mm to 0.62 mm. This level of deflection is manageable in a thermoplastic injection process.

Those skilled in the art of mechanical engineering will recognize that Figure 5 approximates a pressure vessel for the case of a soft tread and high modulus reinforcements. As such, well-known equations apply that relate reinforcement tension to internal pressure. Further use of basic relationships between modulus, area, and strain can be added to create a relationship between a desired maximum permissible radial deflection and other design parameters. This is given below:

$$\frac{PR^2}{AE}W < R\epsilon \qquad (1)$$

Where R= inner radius of annular beam
P = injection molding pressure at inner radius
W = annular beam width
A = total reinforcement cross section
E = reinforcement Young's modulus
$\epsilon$ = reinforcement circumferential strain
and $R_\epsilon$ = radial deflection at inner radius

The inventors have found that an injection pressure P = 1 MPa (146 psi) is a representative pressure at the inner radius of the beam during a molding process. Further, the inventors have determined that an acceptable value for the radial deflection $R_\epsilon$ at the inner radius may be as low as 2 mm. Substituting these in Equation (1):

$$\frac{R^2}{EA}W < 2\frac{mm^3}{N} \qquad (2)$$

That is, the annular beam width multiplied by the square of the radius R divided by the product of the reinforcement Young's modulus and the total reinforcement cross section should be less than 2 cubic millimeters per newton. Equation (2) simply gives the radial deflection of the inner radius of the annular beam in mm, for the representative pressure P = 1 MPa. In some cases, an acceptable value may be as low as 2 mm. In some cases, this may be 1.5 mm. In other cases, it may be 1.0 mm, or even lower.

Equation (2) is provided with units of Newtons and millimeters. Thus, stress is in Mega-Pascals. Other unit systems should be converted to these units, in order to apply Equation (2).

The analysis above assumes the reinforcement has a constant pace in the axial direction for each of the reinforcement layers. It also assumes the reinforcement layers extend across the lateral extents of the annular beam. Designs not in keeping with the above do not escape the intent of this application. The above equation can still be used to approximate the deflection of the annular beam in an injection molding operation.

The annular beam deflection at inner radius under injection pressure may also be directly measured using the following procedure:

1. Place the annular beam in the thermoplastic injection mold
2. Measure a minimum radial distance from a mold entity used to form the annular support to the radially inward extent of the annular beam
3. Form the NPT, using the thermoplastic process to form the annular support
4. Cut the NPT annular beam and annular support at the location of said minimum radial distance.
5. Measure a radial thickness of the thermoplastic elastomer used to form the annular support.
6. Subtract in-mold distance from actual thickness. This is the amount by which the inner radial surface of the annular band deflected during the molding process.

As an exemplary example for Equation (2), the NPT of Figure 1 has a total reinforcement cross section A = 800 mm². The reinforcement has a modulus = 40,000 N/mm². Therefore, EA = 3.2E+07 N. With an inner radius = 300mm, and width W = 250 mm, we have $R_\epsilon$ = 0.7 mm.

From prior art US 7,201,194, 2 reinforcing layers are disclosed. Using disclosed values G = 5 MPa, and E'

6

membrane / G = 1000:1, we have a total EA = 2.5E+06 N. Using an R = 330 mm, as disclosed, and W = 250 mm, R $\in$ = 10.5 mm. This is much too high and would be insufficiently stiff for injection molding.

While a high circumferential stiffness in tension is needed for efficient production process, high circumferential compressive strength is needed for product performance. The inventors have found that multiple layers of reinforcement also improve load carrying capacity in off-road conditions where very high impacts can occur, often over objects with reverse curvature. This was also studied with a 2D plane strain FEA.

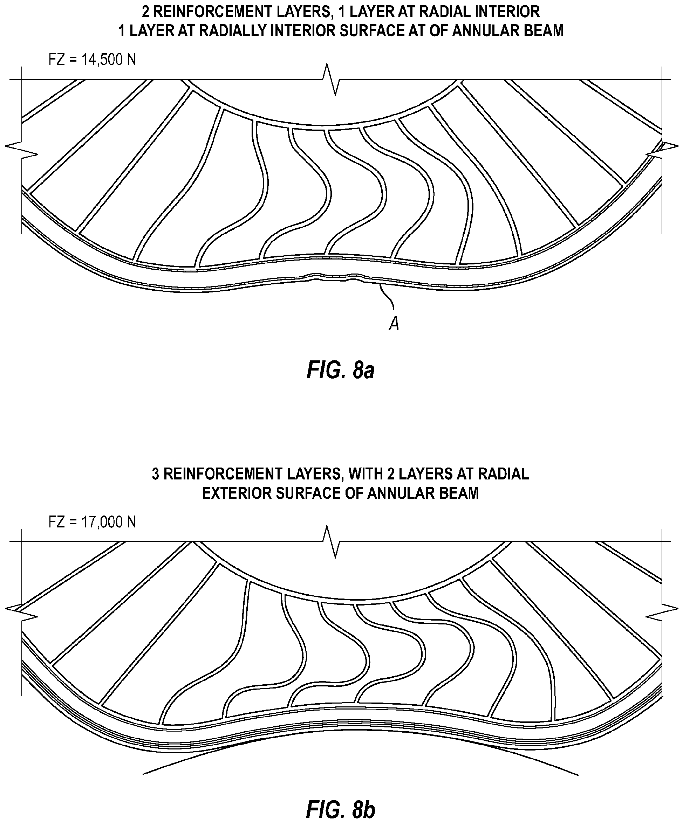

Figure 8a shows an NPT having 2 layers of glass monofilament reinforcement in the annular beam. The layers are separated by a layer of isotropic rubber. The NPT is loaded against a surface of reverse curvature, with a radius equal to that of the NPT. At 14,500 N, the reinforcement layer on the outer radial extent of the annular beam buckles. It becomes unstable. This may lead to failure - either in the rubber matrix or the reinforcement itself.

Figure 8b shows an NPT having 3 layers of reinforcement. Now, there are 2 adjacent layers at the outer radial extent of the annular beam. At a load of 17,000 N, the structure remains stable.

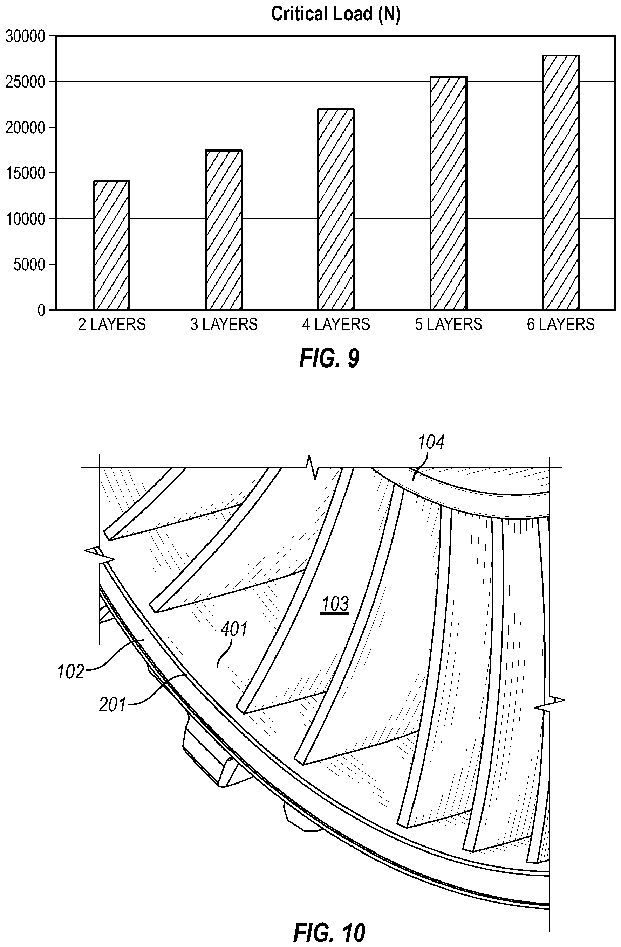

The "critical load" is the load at which cord buckling begins to occur. Critical load is shown relative to the number of reinforcement layers in Figure 9. For 6 layers, a critical load of 27,500 N is predicted. This represents a doubling of the performance of 2 layers. The mechanism for this improvement may relate to the creation of a reinforced annular beam that is transversally isotropic.

In the above referenced article in **Journal of Composites**, a unidirectional composite's critical buckling compressive stress is given by:

$$\sigma_c = G_{12} = G_m \frac{1 + V_f}{1 - V_f} \tag{3}$$

Where $\sigma_C$ = critical buckling stress
$G_{12}$ = shear modulus in the plane of the applied stress
$G_m$ = matrix shear modulus
Vf = fiber (or cord) volume fraction

The unidirectional composite is assumed transversally isotropic. When the composite is not transversally isotropic, the critical buckling stress drops. Therefore, the reinforcement pattern shown in Figure 4b is exemplary. As such, the inventors have found that equations typically applied to so-called classical composites (fibers of carbon or glass, with a thermoset resin such as vinyl-ester) also describe cord-rubber composites.

It is not obvious to those in the field of tire design to consider that a cord-rubber composite may behave like a classical composite of high modulus resin and fibers. Excellent prototype performance in testing, as well as these modeling results, show this is indeed the case.

The inventors have found that performance is best when the cord to cord distance in the radial direction is within 33% of the cord to cord distance in the axial direction. In some cases, this may need to be 25%, and in some cases, 10%, and in some cases even less.

Further, the inventors have found that a critical buckling stress, per Equation (3), of at least 5 MPa is needed; in some cases, at least 8 MPa, and in other cases, even higher.

The required cord volume fraction may be at least 0.15; in other cases, 0.25; in other cases, 0.35, and in other cases, even higher. A rubber matrix shear modulus may be at least 3 MPa, in some cases 5 MPa, and in some cases even higher.

The outer radial reinforcement layers sustain high compressive stress, even without consideration of macroscopic buckling. As such, the cords themselves need to have high compressive strength. The journal paper discloses a method of measuring compressive strength of a single cord or cable reinforcement. Using that methodology, a continuously pultruded glass monofilament may have a compressive strength of 1.1 GPa. The inventors have found that an exemplary NPT benefits from a reinforcement having a compressive strength of at least 0.5 MPa; in other cases, 0.8 MPa; and in the most severe use, more than 1.1 GPa. Compressive strength of any cord or cable can be measured using the same procedure described in the journal paper.

**Creation of a pre-tensioned non-pneumatic structure**

Figure 10 is an exemplary NPT. The annular support comprises thermoplastic elastomer spokes 103 that extend in the radial direction which do not intersect other ones of the spokes. The outer radial extent is adhered to the inner radial extent 201 of the annular beam. During the injection molding process, a uniform thickness 401 of thermoplastic elastomer is adhered to the inner radial surface of the annular beam. The inner radial extent is adhered to the outer radial extent of the rim portion 104, which may comprise the thermoplastic elastomer. The rim may be thicker and more rigid than the spokes. Accordingly, this creates a rigid, fixed-fixed boundary for the spoke.

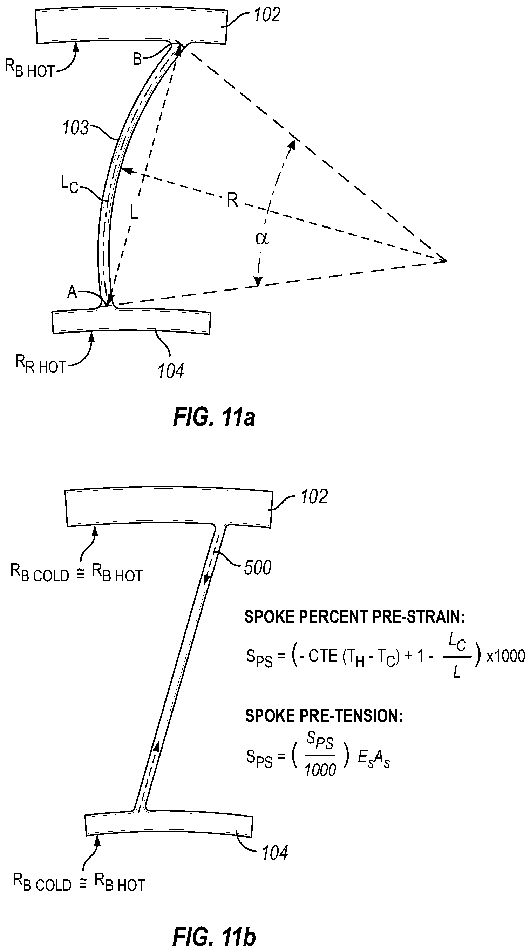

Figure 11a shows an R-T cross section of an exemplary NPT as configured in the mold, before de-molding. Spoke 103 extends from radially outer extent B (joined to annular beam 102) to radially inner extent A (joined to rim 102). The curvilinear distance Lc is the length of the spoke before de-molding. In this representative example, the curvilinear distance Lc = R$\alpha$, with angle $\alpha$ in radians. Distance L is the linear distance between points A and B.

As a spoke cools after demolding, thermal contraction occurs and the stress-free length decreases. The degree of tensile prestrain in the cool spoke relates to the amount of thermal contraction as well as the difference between the spoke curvilinear distance and linear distance. This can be approximated as follows:

$$S_{PS} = \left( -\mathrm{CTE}\, (T_H - T_c) + 1 - \frac{L_c}{L} \right) \mathrm{x} 100 \qquad (4)$$

Where: $S_{PS}$ is spoke prestrain, in percent.
CTE is the linear coefficient of thermal expansion
$T_H$ is the spoke temperature in the mold
Tc is ambient temperature
Lc is spoke curvilinear length in mold
L is distance between spoke radial extents

The associated spoke pre-tension is given by:

$$S_{PT} = \left( \frac{S_{PS}}{100} \right) E_S A_S \qquad (5)$$

Where: $S_{PT}$ is spoke pretension
Es is the spoke modulus
As is the spoke cross section area

Figure 11b shows the after-molding geometry of the exemplary NPT of Figure 10a. Due to the circumferential reinforcement of the annular beam 102, using a reinforcement of low CTE, the inner radius of the annular beam $R_B$ is relatively unchanged. Similarly, the inner radius $R_R$ of rim 104 is relatively unchanged or may even be slightly smaller. An exemplary example of the rim design will be shown in the section below.

The inventors have found that a spoke prestrain $S_{PS}$ of at least 0.5% is needed to give the advantageous load vs. deflection behavior that was earlier disclosed; in some cases, at least 1.0% prestrain is better; in other cases, at least 1.5% is beneficial, and in others, even more.

Actual spoke prestrain may vary from Equation (4) depending on other construction factors, such as the CTE of the reinforcement. The true prestrain may be measured by:

- Measuring the after molding, actual spoke length from point A to point B - the outer and inner radial extents of the spoke.
- Marking the points used to measure this distance.
- Cutting the spoke out of the NPT.
- Measuring the stress-free spoke that has been removed from the NPT

If the spoke is under tension in the molded tire, the stress-free length will be less. The amount by which it is less, divided by the length before removal, can give the percent pre-strain in the tire.

The simple geometry used for the inmold spoke geometry of Figure 11a is for illustration purposes only. Any curvilinear spoke geometry may be used. Standard computer aided design tools enable calculation of any such curvilinear distance.

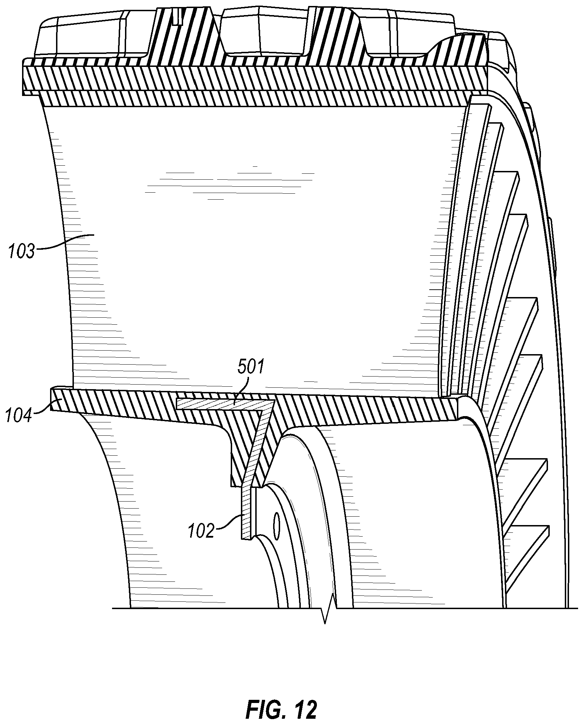

Figure 12 shows an exemplary NPT R-Y cross section. The rim material 104 may comprise thermoplastic elastomer that is formed in the same operation as the spokes. Further, the hub 105 may have portions 501 that extend in the axial direction. In some cases, the hub may extend 15% over the axial width of the rim; in other cases, the hub may extend 30%; and in other cases, the hub may extent over 50% of the axial width.

With a steel hub design that extends over 50% of the axial rim width, the rim $R_B$ may not change during the molding operation. Steel is high modulus and low CTE, which constrains the rim. If the hub extends 15% or less over the axial width of the rim, the rim $R_B$ may decrease as the tire cools. Since most of the rim comprises the thermoplastic elastomer, $R_B$ decreases due to the high CTE. This can increase the amount of prestrain in the spokes to a greater value than that given in Equation (5).

This exemplary rim design embodies a hub that is over-molded by the same thermoplastic elastomer used to form the spokes and the rim. It may be low cost, yet quite efficient in providing an anchor for the lower extremity of the spokes.

### High modulus spokes with a high buckling load

Advantages of spoke pre-strain can be amplified with other design parameters. For example, the inventors have found that spoke modulus and spoke thickness may greatly accentuate the positive performances. Along with the effect of thermal shrinkage, these were studied with 2D FEA. The cumulative effect of these design parameters was surprising. One can turn a "tension-based" NPT into a hybrid NPT that supports load through a combination of pre-tension, compression, and tension forces.

The tire size 33x10-15 is commonly used for larger Utility Task Vehicles (UTV). 4 versions shown below were modeled in this size. Each version had identical annular beams. The only differences related to the design parameters in the table below.

| Version | Spoke Prestrain (%) | Spoke thickness (mm) | Spoke modulus (MPa) |
|---------|---------------------|----------------------|---------------------|
| V1 | 0 | 4 | 45 |
| V2 | 1 | 4 | 45 |
| V3 | 1 | 5 | 90 |
| V4 | 1 | 6 | 90 |

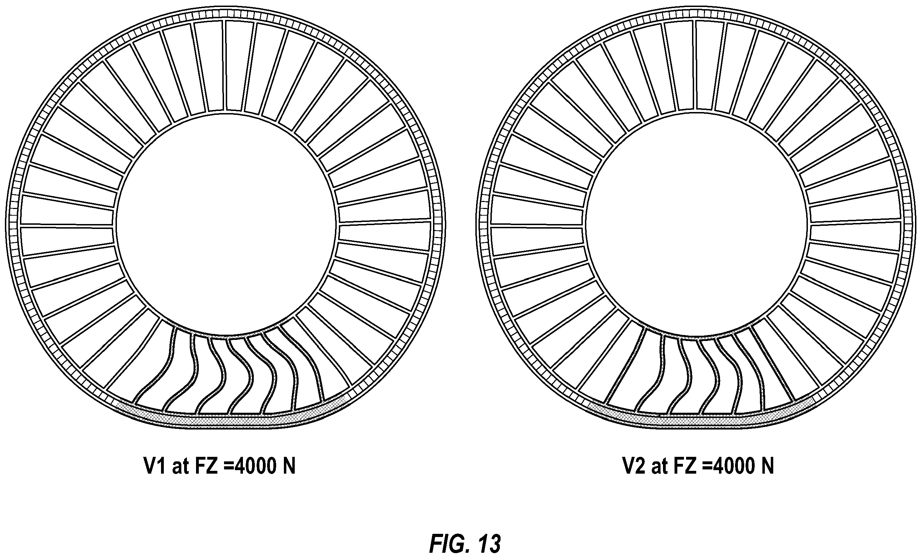

Figure 13 shows deformed geometries of V1 and V2, for which the only difference is spoke prestrain. The 1% spoke prestrain obviously results in lower deflection and less spoke deformation at a design load of 4000 N for V2, compared to V1.

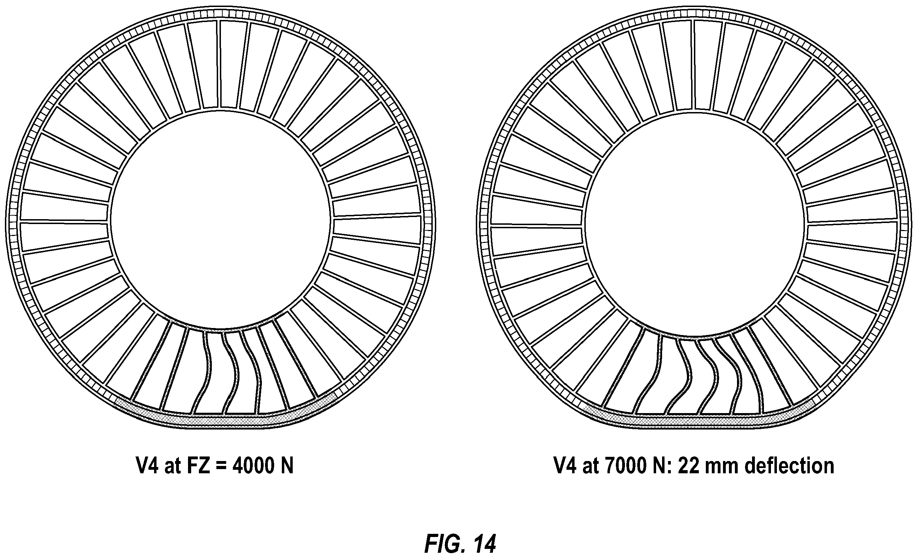

Figure 14 shows version V4 at 4000 N and 7000 N. Af 4000 N, the deflection is minimal - the spoke deformation is quite small. At a load of 7000 N, the deflection is less than the reference version V1 at a load of 4000 N. While spoke pre-strain has not changed from version V2 to V4, spoke pre-tension has been increased. Spoke modulus and spoke thickness have been increased, which results in a much higher spoke pretension, as given in Equation (5).

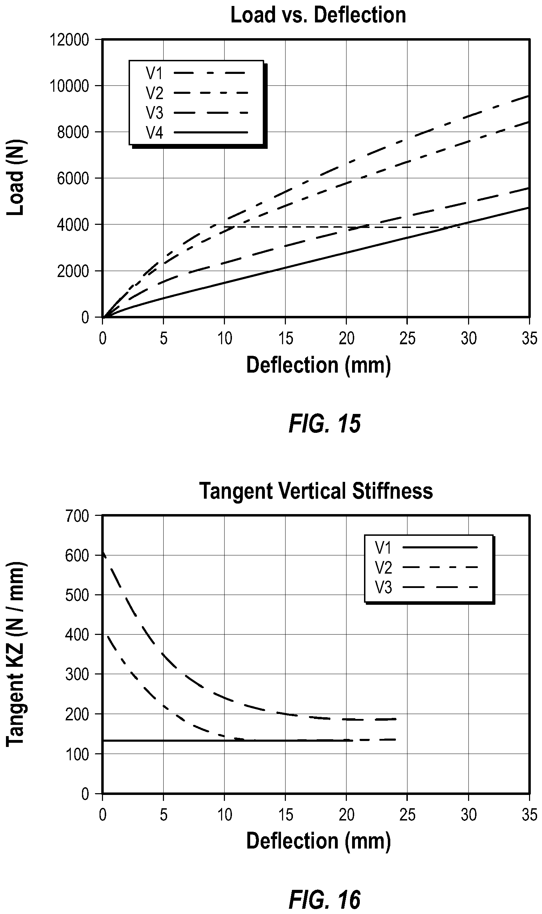

Figure 15 shows FEA predictions of load vs. deflection for V1, V2, V3, and V4.

- From V1 to V2, the effect of spoke pre-strain alone is seen.
- From V2 to V3, the effect of increasing both spoke modulus and thickness is seen.
- From V3 to V4, the effect of further increasing spoke thickness is seen.

Cumulatively, pre-strain, modulus, and thickness can greatly increase the load-carrying capacity of an exemplary NPT. For example, V4 has a deflection of less than 10 mm at a design load of 4000N, whereas the reference version V1 requires 30 mm deflection.

A major effect of the above design levers is increasing the initial tangent KZ. Tangent KZ vs. deflection is shown for each V1, V2, and V3 in Figure 15. At low deflection, the tangent KZ of tires V2 and V3 is much higher than V1. At larger deflection, the tangent KZ becomes much closer.

The inventors have found that a tangent KZ at zero deflection may be at least 2 times the tangent KZ at a deflection required to develop a design load. In other cases, this may be at least 3 times; in other cases, this may be 4 times, and in other cases, even more.

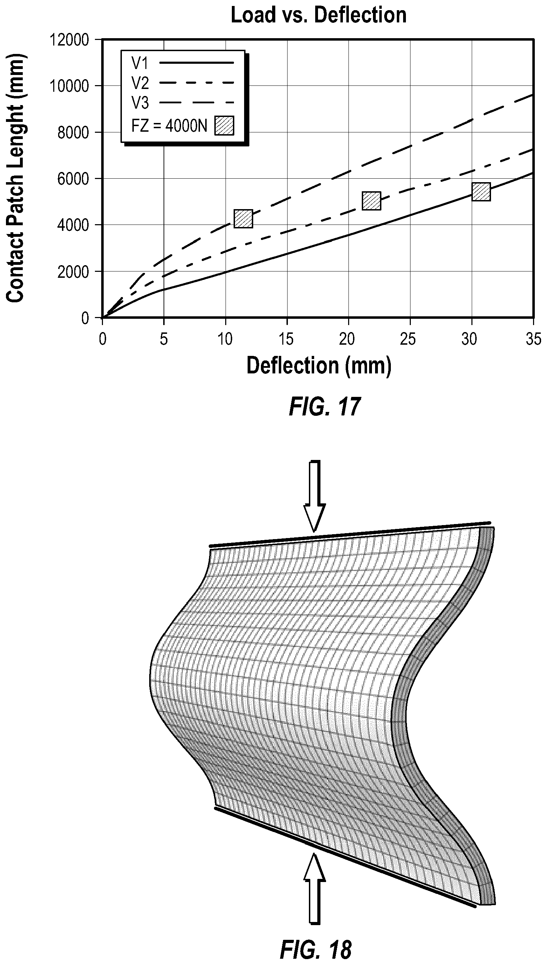

It is apparent from Figure 14 that an exemplary NPT may develop a long contact patch, even at a minimal deflection. The contact patch length vs. deflection is shown for V1, V2, and V3 in Figure 17. V1 requires a deflection of 31 mm to give a design load FZ = 4000 N. At this deflection, V1 develops a contact patch length of 135 mm. Thus, the contact length divided by the vertical deflection is 4.3. At the same load, V2 requires a deflection of 22 mm and a contact length of 125 mm. This gives a ratio of 5.7. V3 requires a deflection of 11 mm and a contact length of 110 mm, for a ratio of 10.0.

Those skilled in the art of tire design will recognize the benefit of developing a long contact patch with a minimal deflection. Traction - especially off-road traction - strongly correlates with contact patch length. An exemplary NPT may combine low deflection with a long contact patch. As such, low rolling resistance and improved endurance may be combined with high traction performance.

The inventors have found that a ratio of a tire deflection at a design load to a contact patch length at the design load may be as much as 5. In other cases, it may be as much as 7; in other cases it may be as high as 10, and in other cases, even higher.

After experimentation and modeling, the inventors have understood that spokes of even moderate thickness may strongly contribute to the load carrying ability. Those skilled in the art of mechanical engineering are familiar with Euler's critical load for columns.

Euler's critical buckling load formula for a column fixed at both ends is:

$$F_C = \frac{4\pi^2 EI}{L^2}$$

For our case of a rectangular spoke cross section as the column:

$$I = \frac{1}{12}\, wt^3$$

Where: $F_C$ is buckling load
E is the spoke modulus
I is the spoke moment of inertia in the R-T plane
w is the spoke width
t is the spoke thickness
L is the distance from spoke intersection with annular beam to intersection with rim

The inventors performed 3D FEA of spoke structures. Figure 18 shows the deformed geometry of a representative model. FEA results agreed very well with Euler's equation. For example, given a spoke length 100 mm, width 200 mm, and modulus 100 MPA:

| Thickness | $F_C$ FEA | $F_C$ Euler Critical |
|---|---|---|
| 2.5 mm | 111 N | 102 N |
| 3.5 | 286 | 280 |
| 4.5 | 591 | 594 |

Rather surprising is the result for a 4.5 mm thick spoke. A compressive force of almost 600 N is required for buckling. With reference to Figures 13 and 14, several spokes are post-buckled, radially inward from the contact patch. 600 N of buckling force per spoke is therefore non-negligible, compared to the design load of 4000 N.

The inventors have found that spoke buckling load can therefore be used as a design parameter in development of an exemplary NPT that carries load in tension (spokes in tension around the top of the tire, away from the contact area) and spokes in compression (spokes in the contact area). This is one of the effects seen in Figure 14, in which V4 has spokes with a higher buckling load.

The inventors have found that an exemplary NPT may have spokes that have a critical buckling load of at least 10% of the design load; in other cases, at least 15% of the design load; in other cases, at least 20% of the design load, and in other cases even higher.

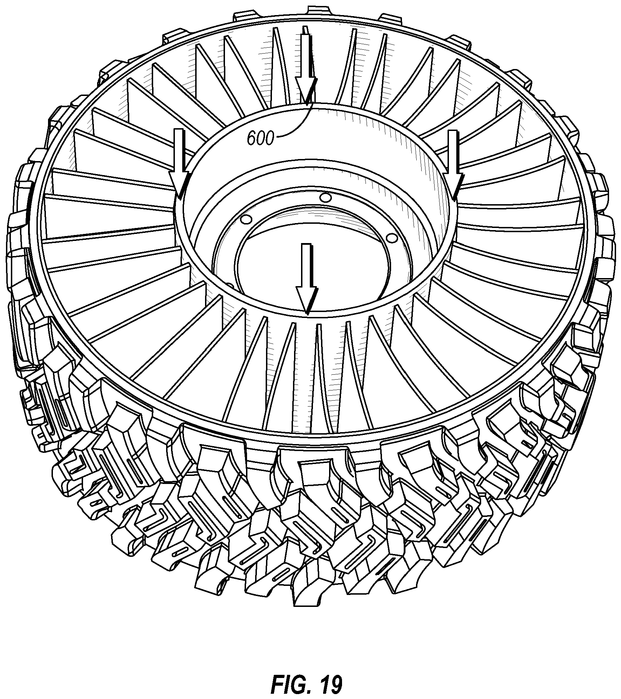

In order to reduce the injection pressure that the thermoplastic elastomer exerts on the radially inward surface of the annular beam, the inventors have found it advantageous to locate injection gates near the rim portion of the exemplary NPT. This is shown in Figure 19, where injection gate 600 is located at or near a portion of the rim. An exemplary NPT may have thermoplastic elastomer comprising at least a portion of the rim. In this case, the elastomer may first form a portion of the rim before forming the annular support.

Mold Flow Analysis (MFA) has shown that injection pressures decrease as the thermoplastic material flows from the rim portion through the annular support, which may comprise radially oriented spokes. When the material reaches the radially inward surface of the annular beam, the pressure may decrease to 2 MPa (290 psi), or even as low as 1 MPa (140 psi), even though injection pressures near the gate 600 may be much higher.

Certain additional elements that may be needed for operation of some embodiments have not been described or illustrated as they are assumed to be within the purview of those of ordinary skill in the art. Moreover, certain embodiments may be free of, may lack and/or may function without any element that is not specifically disclosed herein.

Any feature of any embodiment discussed herein may be combined with any feature of any other embodiment discussed herein in some examples of implementation.

Although various embodiments and examples have been presented, this was for purposes of description, but not should not be limiting. Various modifications and enhancements will become apparent to those of ordinary skill in the art.

As used herein, the term "method" or "process" refers to one or more steps that may be performed in other ordering than shown without departing from the scope of the presently disclosed invention. Any sequence of steps is exemplary and is not intended to limit methods described herein to any particular sequence, nor is it intended to preclude adding steps, omitting steps, repeating steps, or performing steps simultaneously.

**Claims**

1. A method for forming a non-pneumatic tire, the method comprising:

inserting a tread portion and an annular beam (102) into a mold (400, 401), said tread portion comprising a tread pattern (303) and said annular beam extending radially inward from the tread portion and comprising a circumferential reinforcement, said mold (400, 401) supporting the tread pattern (303) only on an outer radial extent (305) of the tread pattern;
inserting a rim (104) extending radially inward from the annular beam; and
forming an annular support comprised of a thermoplastic elastomer extending radially inward from the annular beam.

2. The method of claim 1, wherein the annular support is formed by thermoplastic injection.

3. The method of claim 2, wherein the non-pneumatic tire further comprises a rim that extends radially inward from the annular support.

4. The method of claim 3, wherein the annular support comprises spokes that extend in the radial direction, connecting the annular beam to the rim.

5. The method of claim 4, wherein the rim comprises the thermoplastic elastomer.

6. The method of any of claims 1 to 5, wherein an injection gate is at a radially inward extent of the annular support.

7. The method of any of claims 1 to 6, wherein an injection gate is at a radially inward extent of the rim.

**Patentansprüche**

1. Verfahren zum Formen eines nicht-pneumatischen Reifens, wobei das Verfahren umfasst:

Einsetzen eines Laufflächenabschnitts und eines ringförmigen Trägers (102) in eine Form (400, 401), wobei der Laufflächenabschnitt ein Laufflächenmuster (303) aufweist und
wobei sich der ringförmige Träger von dem Laufflächenabschnitt radial nach innen erstreckt und eine Umfangsverstärkung aufweist, wobei die Form (400, 401) das Laufflächenmuster (303) nur an einer äußeren radialen Ausdehnung (305) des Laufflächenmusters trägt;
Einsetzen eines Randes (104), der sich von dem ringförmigen Balken radial nach innen erstreckt; und Bildung eines ringförmigen Trägers aus einem thermoplastischen Elastomer, das sich vom ringförmigen Träger aus radial nach innen erstreckt.

2. Verfahren nach Anspruch 1, bei dem die ringförmige Stütze durch Einspritzen von thermoplastischem Kunststoff gebildet wird.

3. Verfahren nach Anspruch 2, wobei der nicht-pneumatische Reifen ferner eine Felge aufweist, die sich von der ringförmigen Halterung radial nach innen erstreckt.

**4.** Verfahren nach Anspruch 3, wobei der ringförmige Träger Speichen umfasst, die sich in radialer Richtung erstrecken und den ringförmigen Träger mit der Felge verbinden.

**5.** Verfahren nach Anspruch 4, wobei die Felge das thermoplastische Elastomer umfasst.

**6.** Verfahren nach einem der Ansprüche 1 bis 5, bei dem sich eine Einspritzöffnung in einem radial inneren Bereich des ringförmigen Trägers befindet.

**7.** Verfahren nach einem der Ansprüche 1 bis 6, bei dem sich eine Einspritzöffnung in einem radial inneren Bereich des Randes befindet.


**Revendications**

**1.** Procédé pour former un pneu non pneumatique, le procédé comprenant :

l'insertion d'une partie bande de roulement et d'une barre annulaire (102) dans un moule (400, 401), ladite partie bande de roulement comprenant une sculpture de bande de roulement (303) et ladite barre annulaire s'étendant radialement vers l'intérieur à partir de la partie bande de roulement et comprenant un renfort circonférentiel, ledit moule (400, 401) supportant la sculpture de bande de roulement (303) seulement sur une étendue radiale extérieure (305) de la sculpture de bande de roulement ;
l'insertion d'une jante (104) s'étendant radialement vers l'intérieur à partir de la barre annulaire ; et
la formation d'un support annulaire constitué d'un élastomère thermoplastique s'étendant radialement vers l'intérieur à partir de la barre annulaire.

**2.** Procédé selon la revendication 1, dans lequel le support annulaire est formé par injection thermoplastique.

**3.** Procédé selon la revendication 2, dans lequel le pneu non pneumatique comprend en outre une jante qui s'étend radialement vers l'intérieur à partir du support annulaire.

**4.** Procédé selon la revendication 3, dans lequel le support annulaire comprend des rayons qui s'étendent dans la direction radiale, reliant la barre annulaire à la jante.

**5.** Procédé selon la revendication 4, dans lequel la jante comprend l'élastomère thermoplastique.

**6.** Procédé selon l'une quelconque des revendications 1 à 5, dans lequel une grille d'injection est au niveau d'une étendue radialement vers l'intérieur du support annulaire.

**7.** Procédé selon l'une quelconque des revendications 1 à 6, dans lequel une grille d'injection est au niveau d'une étendue radialement vers l'intérieur de la jante.

**FIG. 1**

**Load vs. Deflection**
Prior art and Exemplary NPT

*FIG. 2*

*FIG. 3*

**FIG. 4a**

**FIG. 4b**

FIG. 5

FIG. 6

ISOTOPIC RUBBER ALONE

FIG. 7a

RUBBER PLUS GLASS COMPOSITE
REINFORCEMENT AT PACE = 1.7 MM

FIG. 7b

2 REINFORCEMENT LAYERS, 1 LAYER AT RADIAL INTERIOR
1 LAYER AT RADIALLY INTERIOR SURFACE AT OF ANNULAR BEAM

FZ = 14,500 N

*A*

**FIG. 8a**

3 REINFORCEMENT LAYERS, WITH 2 LAYERS AT RADIAL
EXTERIOR SURFACE OF ANNULAR BEAM

FZ = 17,000 N

**FIG. 8b**

## Critical Load (N)

FIG. 9

FIG. 10

**FIG. 11a**

**SPOKE PERCENT PRE-STRAIN:**

$$S_{PS} = \left( - CTE \left( T_H - T_C \right) + 1 - \frac{L_C}{L} \right) \times 1000$$

**SPOKE PRE-TENSION:**

$$S_{PS} = \left( \frac{S_{PS}}{1000} \right) E_s A_s$$

**FIG. 11b**

103

501

104

102

**FIG. 12**

V1 at FZ =4000 N

V2 at FZ =4000 N

*FIG. 13*

V4 at FZ = 4000 N

V4 at 7000 N: 22 mm deflection

*FIG. 14*

**Load vs. Deflection**

*FIG. 15*

**Tangent Vertical Stiffness**

*FIG. 16*

## Load vs. Deflection

*FIG. 17*

*FIG. 18*

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190009613 A
- US 9004901 B
- US 9751270 B
- EP 3144160 A1
- US 7201194 B

**Non-patent literature cited in the description**

- Theoretical and experimental compressive strength of a glass fiber -vinyl ester pultruded composite. *Journal of Composite Materials,* vol. 49 (6), 739-748